Europäisches Patentamt

European Patent Office

Office européen des brevets

(19)

(11) Publication number: 0 335 472
A1

## (12) EUROPEAN PATENT APPLICATION

(21) Application number: 89200799.8

(51) Int. Cl.⁴: **B65G 1/07**

(22) Date of filing: 29.03.89

(30) Priority: 31.03.88 NL 8800835

(43) Date of publication of application:
04.10.89 Bulletin 89/40

(84) Designated Contracting States:
AT BE CH DE ES FR GB GR IT LI LU NL SE

(71) Applicant: BRINKERS, Gerardus Cornelis
Duinvoetlaan 20
NL-2243 GL Wassenaar(NL)

(72) Inventor: BRINKERS, Gerardus Cornelis
Duinvoetlaan 20
NL-2243 GL Wassenaar(NL)

(74) Representative: Iemenschot, Johannes
Andreas et al
Exterpatent P.O. Box 90649
NL-2509 LP The Hague(NL)

(54) Portable carrying and lifting device for supporting a platform.

(57) A portable carrying and lifting device for supporting a platform (12) which is movable in the vertical direction, is designed as a loose unit to be placed inside a container (27) for the transportation and temporary storage and also for the display and presentation for sale at hand level of products such as packaged foods, which are placed on the platform. The device comprises a scissor system (1) on which the platform can rest, and which is made up of at least one simple scissor mechanism, and means for bringing the scissor system (1) in extended state. Said means comprise a detachable resilient element (18) acting on the hinge of the at least one scissor mechanism so as to push the scissor system to its extended state. The resilient element may be a helical compression spring (18), a gas spring or a leaf spring.

Fig. 1.

## PORTABLE CARRYING AND LIFTING DEVICE FOR SUPPORTING A PLATFORM.

### BACKGROUND OF THE INVENTION

The invention relates to a portable carrying and lifting device for supporting a platform which is movable in the vertical direction, the device being designed as a loose unit to be placed inside a container for the transportation and temporary storage and also for the display and presentation for sale at hand level of products such as packaged foods, which are placed on the platform, the device comprising a scissor system on which the platform can rest, and which is made up of at least one simple scissor mechanism, and means for bringing the scissor system in extended state.

Such a device is known for supporting a vertically adjustable platform in a container for the transportation and temporary storage and also for the display and presentation for sale at hand level of products such as packaged foods, the platform in this case serving to carry the products. The scissor systeem here comprises to simple scissor mechanisms and rests on a base. The platform can be moved up and down by turning a screwed spindle disposed near the base between the scissor arms of the lower scissor mechanism.

The disadvantage of the known device is that moving the platform up and down must be carried out by hand. In particular, if products have to be removed from the container, the platform has to be adjusted again and again by hand. When the container is empty and the platform is standing in its highest position, it is relatively time-consuming and difficult to move the carrying device back into the collapsed position.

### SUMMARY OF THE INVENTION

The object of the invention is to eliminate this disadvantage and produce a carrying device which moves up and down automatically, and which can be returned easily to the collapsed state, in which the dimensions are minimal, easily and without the use of any tools.

This object is achieved by a carrying and lifting device of the above-mentioned type which is characterized in that the means for bringing the scissor system in extended state comprise a detachable resilient element acting on the hinge of the at least one scissor mechanism so as to push said scissor mechanism to its extended state.

With the carrying and lifting device according to the invention, when articles are stacked on the platform resting on the link lever system this platform will move downwards automatically, and when the articles are removed it will automatically move upwards again. Making the resilient element detachable means that when the device is unloaded the also unloaded resilient element can be removed easily and without the need for any tools to do so, and the device can be collapsed very easily.

In a practical embodiment of the device according to the invention each scissor arm comprises two spaced parallel rods. The rods of each scissor arm lying in a plane at right angles to the direction of movement of said scissor arm, and the resilient element is disposed in the space between the parallel rods. This make it possible to store the resilient element in the space between the rods of the link levers when the device is collapsed.

Further embodiments of the device according to the invention are claimed in the dependent claims.

The invention will now be explained in greater detail by the description below of an example of an embodiment of the device according to the invention, with reference to the drawings.

### BRIEF DESCRIPTION OF THE DRAWINGS

Fig. 1 is a side view of a schematically shown embodiment of the device according to the invention;

Fig. 2 is a view of the device of Fig. 1, viewed in the direction of the arrow II;

Fig. 3 is a view of the device of Fig. 1 along the line III-III;

Fig. 4 shows on a enlarged scale a possible embodiment of one of the couplings between the scissor system and the resilient element shown in Figs. 1 to 3;

Fig. 5 is a cross section along the line V-V in Fig. 4;

Fig. 6 shows the device of Fig. 1 in the collapsed state;

Fig. 7 shows on an enlarged scale another embodiment of one of the couplings between the scissor system and the resilient element shown in Figs. 1 to 3;

Fig. 8 is a cross section along the line VIII-VIII in Fig. 7;

Fig. 9 shows the device of Fig. 1 placed in a filled container;

Fig. 10 shows a resilient element in the form of a gas spring, in particular a gas-filled bellows;

Fig. 11 shows the bottom part of the device of Fig. 1, mounted on a base board; and

Fig. 12 shows the bottom part of the device of Fig. 1, mounted on an underframe for a roller container;

Fig. 13 is a side view of a schematically shown other embodiment of the device according to the invention with a leaf spring;

Fig. 14 shows the device of Fig. 13 in almost collapsed state.

## DETAILED DESCRIPTION OF THE PREFERRED EMBODIMENTS

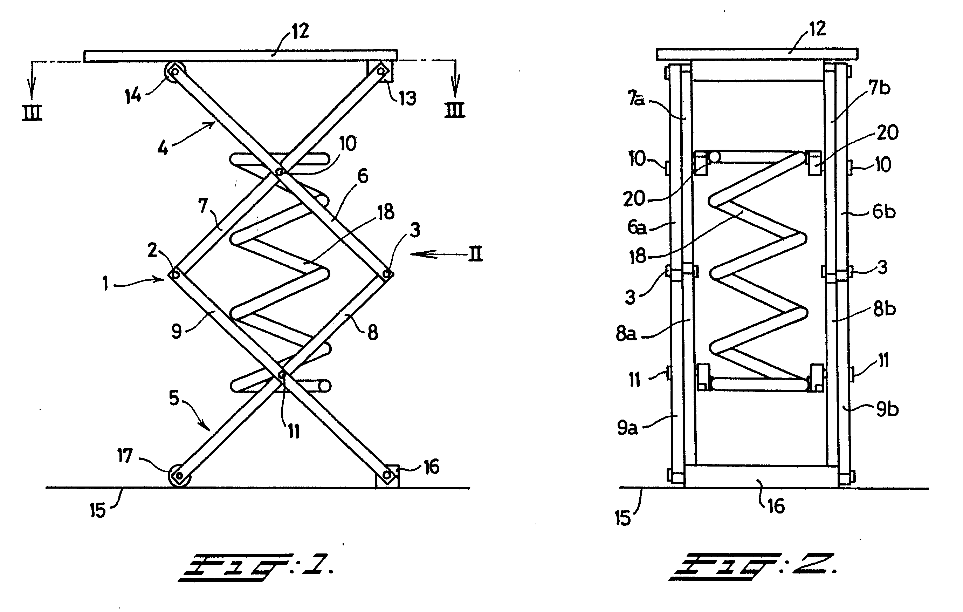

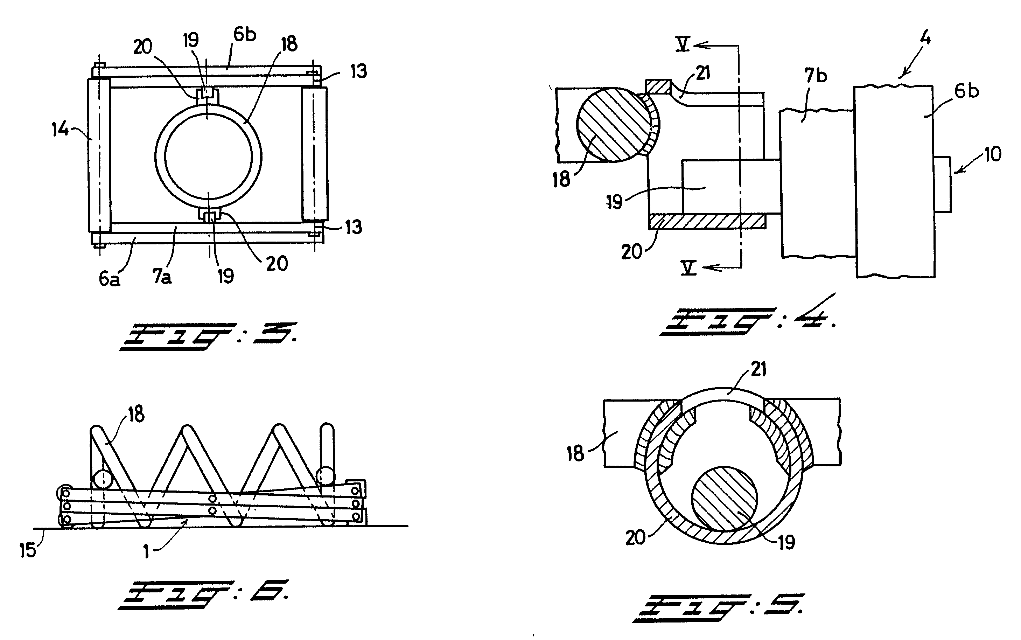

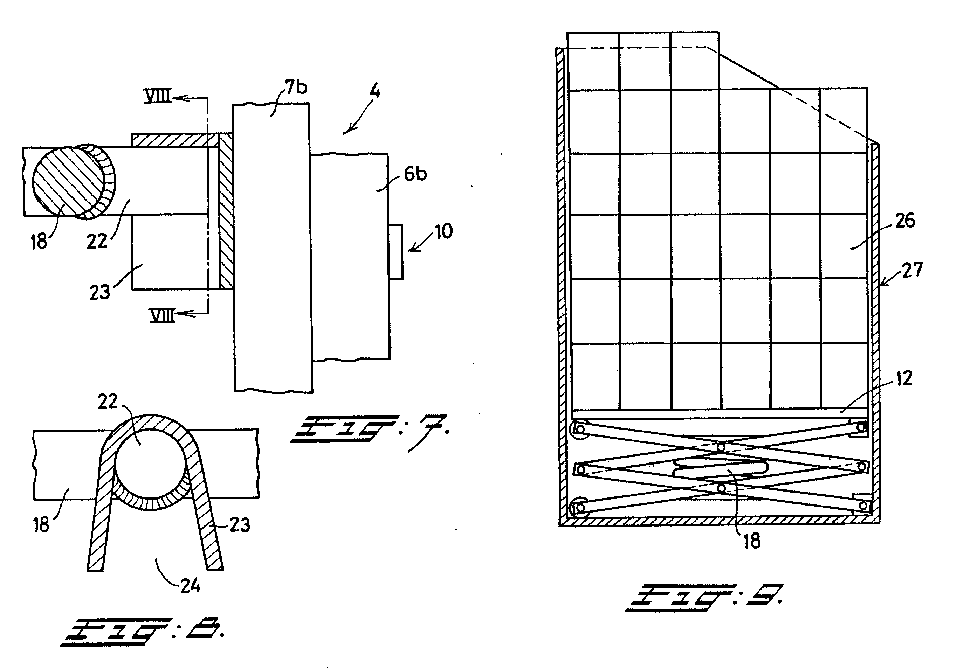

The carrying device according to the invention shown in Figs. 1 to 3 comprised a scissor system 1, comprising two simple scissor mechanisms 4 and 5 connected in series and hingedly at 2 and 3. Each of the two scissor mechanisms 4 and 5 comprises to scissor arms 6 and 7 and 8 and 9 respectively, which are hingedly connected to each other at 10, 11. Each scissor arm 6 to 9 is made up of two parallel rods 6a, 6b; 7a, 7b; 8a, 8b and 9a, 9b. The rods of each scissor arm can be connected to each other by transverse rods (not shown here).

A platform 12 is hingedly connected at 13 to the scissor arm 7. The platform 12 also rests on a roller 14 which is disposed at the end of the scissor arm 6.

In Figs. 1 and 2 the carrying device rests on a base 15, at one side by means of a supporting element 16 which is hingedly connected to the end of the scissor arm 9, and at the other side by means of a roller 17 which is connected to the end of the scissor arm 8. The purpose of the rollers 14 and 17 is to permit easy movement of the ends of the scissor arms 6 and 8 over the platform 12 and over the base 15 when the platform 12 is moving up and down.

A resilient element in the form of a helical compression spring 18 is provided between the hinges 10 and 11 of the scissor mechanisms 4 and 5. This compression spring 18 is detachably coupled to the scissor system 1.

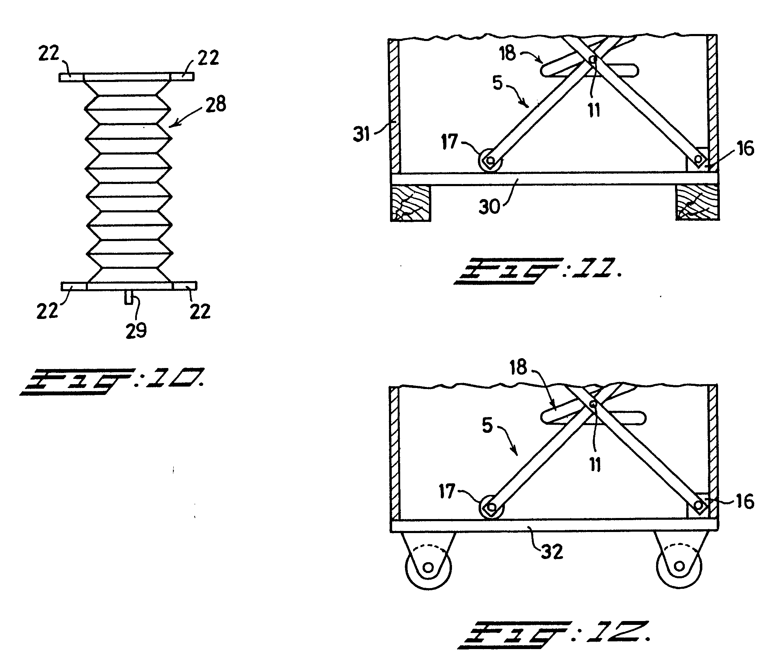

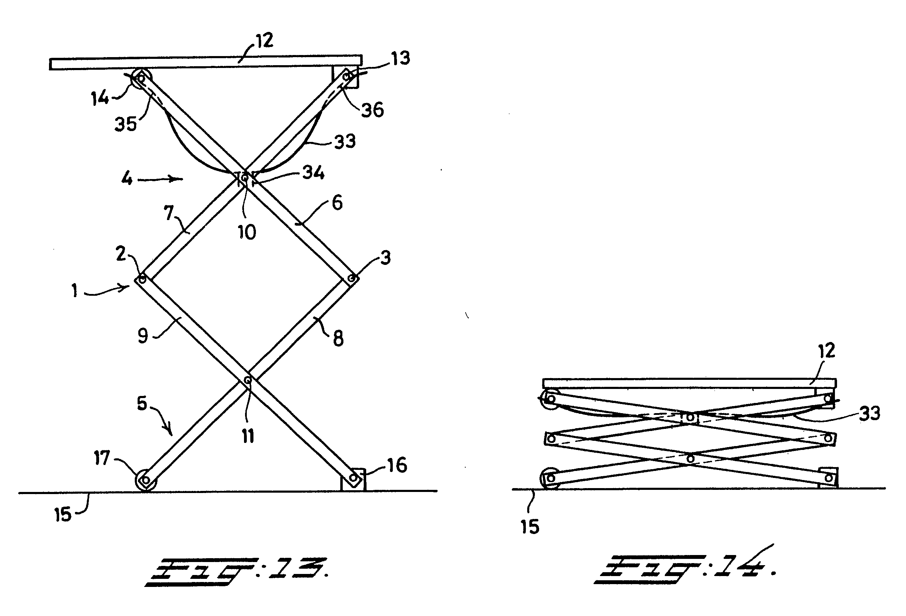

Figs. 4 and 5 show how the coupling between the compression spring 18 and the scissor system 1 can be designed at the hinge 10. The scissor mechanism 4 is provided on either side with an inward-projecting pin 19 at the hinge 10. The compression spring 18 is provided with outward-projecting holding members 20, lying diametrically opposite each other to accomodate the pins 19. Each holding member here comprises a length of pipe 20 which is welded to the spring 18 and is provided with an opening 21 disposed in the wall at the top for passage of the pin 19. At the hinge 11 of the scissor mechanisme 5 the coupling between the compression spring 18 and the scissor system 1 is designed in the same way, except that the openings in the pipe lengths for allowing through the inward-projecting pins are made at the bottom side.

With these simply designed couplings it is possible to fit the compression spring 18 in the scissor system 1 quickly and simply. This can be carried out by pulling out the scissor system 1 so far that the distance between the inward-projecting pins at the hinges 10 and 11 is slightly greater than the distance between the pipe lengths 20 welded to the compression spring, placing the compression spring 18 with the pipe lengths 20 between the pins 19, and the lowering the scissor system 1 until the pins 19 are resting on the bottom of the pipe lengths 20. The process is carried out in the reverse order for the removal of the compression spring 18. It is advantageous here for the platform 12 to be hingedly connected to the scissor system 1, so that it can be folded up when the compression spring 18 is being placed and removed.

The compression spring 18 is of such dimensions that when the link lever system 1 is collapsed the compression spring 18 can be placed horizontally between the rods of the scissor arms, so that little space is taken up, as shown in Fig. 6.

Another possible embodiment of a coupling between the compression spring 18 and the scissor system 1 is shown in Figs. 7 and 8. The compression spring 18 is provided here with outward-projecting pins 22 which are diametrically opposite each other and which are welded to the spring 18. De scissor mechanism 4 is provided on both sides on the inside at the hinge 10 with a U-shaped bracket 23 in which a pin 22 can rest. The coupling between the compression spring 18 and the link lever system 1 is designed in a similar way at the hinge 11 of the scissor mechanism 5. The U-shaped brackets 23 at the hinges 10 and 11 face each other with the openings 24, so that the spring 18 can be confined with the pins 22 between the brackets 23.

It will be clear that, apart from the embodiments of the coupling between the compression spring 18 and the scissor system 1 described here, countless other embodiments are possible. It is always important here that the compression spring, or more generally the resilient element, can be detached from the scissor system 1 easily, and without the necessity for using any tool.

The carrying and lifting device described is particularly suitable for use in a disposable or collapsible container for the transportation, temporary storage and also display at hand level and presentation for sale of products such as packaged foods, the platform being used to carry the products. Fig. 9 shows a container 27 virtually full of products 26, with a carrying and lifting device according to the invention placed in the container 27. Since the container is virtually full, the carrying and lifting device is in the virtually fully compressed state. As more products are removed from the container the platform 12 will be pressed upwards by the carrying and lifting device under the influence of the action of the spring 18, until the container is completely empty and the carrying and lifting device is in the extended position, as shown in Fig. 1. The carrying and lifting device can then be removed from the container, and the container can be folded flat and/or thrown away. The carrying and lifting device can be dismantled by removing the spring 18. The scissor system 1 can then be collapsed and returned together with the spring 18 as a compact unit (see Fig. 6) to the factory, where the scissor system 1 and the compression spring 18 can be again put together again to be placed in a new container which is to be filled with products.

Instead of a compression spring 18, a gas spring 28, in particular a gas-filled bellows, can be used as a resilient element. Fig. 10 shows such a bellows 28 schematically and in the extended state. At the ends of the bellows are projecting pins 22 which can be accomodated in holding members 23 disposed on the scissor system 1.

A combination of a compression spring 18 and a gas spring 28 can also be used as a resilient element. The gas spring 28 will then be placed inside the compression spring 18. The gas spring 28 can be provided with a connection 29 by means of which the pressure in the gas spring can be set.

The lifting and carrying device according to the invention can also be mounted on a base board or pallet 30, as shown in Fig. 11. A container can be formed here by placing a sheath 31 or the like on the base board, in such a way that the bottom edge of the sheath 31 rests on the edge of the base board 30. Existing distribution channels can be used when using such a container.

The device according to the invention can also be mounted on a wheeled underframe 32 (see Fig. 12) which can serve as the underframe for a roller container.

Fig. 13 shows a device like the one of Fig. 1 with a bended leaf spring 33 as a resilient element. The leaf spring 33 is provided between the free upper ends of the scissor arms 6 and 7 of the scissor mechanism 4 and the hinge 10 thereof. At the middle part the leaf spring 33 is provided with a U-shaped member 34, which grasps around a transverse connection rod between the parallel rods of the scissor arms 6 and 7 at the hinge 10. The free end parts 36 and 37 of the leaf spring 33 lie against transverse connection rods between the parallel rods of the scissor arms 6 and 7 at the ends of said scissor arms. It will be clear that such a leaf spring 33 is also easily detachable.

Fig. 14 shows the device of Fig. 13 in almost collapsed state. The leaf spring 33 may be made up of a number stacked leaf spring elements working in series or of number of parallel leaf spring elements.

A leaf spring 33 could also be placed at other places in the scissor systeem between a hinge point 10 or 11 of a scissor mechanism 4 or 5 respectively and the ends of the scissor arms 6, 7 or 8, 9 respectively of the scissor mechanisms 4 or 5.

A detached leaf spring 33 can easily be stored in a collapsed scissor system 1, without taking additional space.

Instead of two scissor mechanisms the scissor system may comprise three or more scissor mechanisms, depending on the desired ratio between the travel of the spring 18, 33 and the travel of the scissor system 1.

The scissor system 1 may be provided with means (not shown) for limiting the maximum travel of the spring and thus the maximum travel of the scissor system.

Also means (not shown) for preventing overloading of the spring 18, 33 may be provided.

The carrying and lifting device described has the following advantages:
- the device is mobile and can be designed as a loose unit;
- the height adapts automatically to the weight present on the platform;
- the device is simple to assemble and dismantle, without any tools being necessary for the purpose;
- the device takes up little space when collapsed;
- the device can be used in different types of containers;
- the device provides the possibility for effective use of the entire horizontal cross-sectional face of a container.

## Claims

1. Portable carrying and lifting device for supporting a platform (12) which is movable in the vertical direction, the device being designed as a loose unit to be placed inside a container (27) for the transportation and temporary storage and also for the display and presentation for sale at hand level of products such as packaged foods, which are placed on the platform, the device comprising a scissor system (1) on which the platform can rest, and which is made up of at least one simple scissor mechanism, and means for bringing the scissor system (1) in extended state,characterized in that the means for bringing the scissor system (1) in extended state comprise a detachable resilient element (18;28;33) acting on the hinge of the at least one scissor mechanism so as to push the scissor system to its extended state.

2. Device according to claim 1, characterized in that the scissor system (1) comprises at least two scissor mechanisms (4,5) and that the resilient element (18,28) is detachably disposed between the hinges (10,11) of the at least two scissor mechanisms (4,5).

3. Device according to claim 2, characterized in that each scissor arm (6,7;8,9) of the scissor mechanisms (4,5) comprises two spaced parallel rods (6a,6b;7a,7b;8a,8b;ga,9b) the rods of each scissor arm (6,7;8,9) lying in a plane at right angles to the direction of movement of said scissor arm and the resilient element (18;28) is disposed in the space between the parallel rods.

4. Device according to claim 3, characterized in that the scissor system (1) is provided at the hinges (10,11) of the scissor mechanisms (4,5) with inward-projecting first coupling members (19;23) and the resilient element (18;28) is provided near the ends with diametrically opposite, outward-projecting second coupling members (20;22), said first and second coupling members (19,20;23,22) mating with each other to couple the resilient element (18) in a detachable manner to the scissor system (1).

5. Device according to claim 4, characterized in that each set of mating coupling members (19,20;23,22) comprises a pin (19;22) fixed on the scissor system (1) or on the resilient element (18) and a pin-holding member (20;23) fixed on the resilient element (18;28) or on the link lever system (1) respectively, said pin holding member (20;23) being provided with an opening (21;24) for the passage of the respective pin (19;22).

6. Device according to one of claims 2-5, characterized in that the resilient element is formed by a helical compression spring (18) or a gas spring (28), in particular a gas-filled bellows, or combination of the two, in the latter case the gas spring (28) being disposed inside the helical compression spring (18).

7. Device according to claim 1, characterized in that the resilient element consists of a bended leaf spring (33), the free end parts (35,36) of the leaf spring (33) being detachably connected to either at least one scissor mechanism (4) and the middle part of the leaf spring (33) being detachably connected to the hinge (10) of said scissor mechanism (4).

8. Device according to claim 7, characterized in that each scissor arm (6,7;8,9) of the scissor mechanism (4,5) comprises two spaced parallel rods (6a,6b;7a,7b;8a,8b; 9a,9b), the rods of each scissor (6,7;8,9) lying in a plane at right angles to direction of movement of said scissor arm and being connected to each other by transverse rods at the ends of the scissor (6,7;8,9) and at the hinges (10,11) of the scissor mechanisms (4,5), the leaf spring (33) is provided at the middle part with a U-shaped member (34) grasping around the transverse rod at the hinge (10) of the scissor arms (4) and the free end parts (36,37) of the leaf spring (33) lie against the transverse rods at the ends of the scissor arms (6,7).

9. Device according to claim 7 or 8, characterized in that the leaf spring (33) is made up of a number of stacked leaf spring elements working in series.

10. Device according to claim 7 or 8, characterized in that the leaf spring (33) is made up of a number of parallel leaf spring elements.

_Fig:1._

_Fig:2._

EP 0 335 472 A1

Fig. 3.

Fig. 4.

Fig. 5.

Fig. 6.

VIII

7b

4

6b

18   22

23

10

VIII

$\boxed{FIG \cdot 7.}$

22

18

23

24

$\boxed{FIG \cdot B.}$

26

27

12

18

$\boxed{FIG \cdot 9.}$

EP 0 335 472 A1

FIG.11.

FIG.12.

FIG.10.

Fig.14.

Fig.13.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,A | US-A-4 149 762 (OLSSON) <br> * Whole document * | 1,2 | B 65 G 1/07 |
| Y | US-A-3 863 576 (OLSSON) <br> * Whole document * | 1,2 | |
| A | GB-A-2 110 648 (NIERSTRASZ) <br> * Whole document * | 1-5,8 | |

TECHNICAL FIELDS SEARCHED (Int. Cl.4)

B 65 G

The present search report has been drawn up for all claims

| Place of search | Date of completion of the search | Examiner |
|---|---|---|
| THE HAGUE | 24-05-1989 | WERNER D.M. |